# EUROPEAN PATENT SPECIFICATION

(11) **EP 0 556 966 B1**
(45) Date of publication and mention of the grant of the patent: **16.07.1997**
(21) Application number: 93300705.6
(22) Date of filing: 01.02.1993
(51) Int. Cl.: C04B 30/02, C04B 41/68, B05D 3/08

(54) **Coating surface of hydrophobic microporous thermal insulation material**
Beschichtung von hydrophobem, mikroporösem, wärmeisolierendem Material
Méthode de revêtement de surface de matériau hydrophobe, microporeux d'isolation thermique

(30) Priority: 07.02.1992 GB 9202584
(43) Date of publication of application: 25.08.1993
(73) Proprietor: ZORTECH INTERNATIONAL LIMITED, Droitwich Worcestershire WR9 7DJ (GB)
(72) Inventor: Morgan, Derek Edward, Malvern, Worcestershire (GB); Morgan, Derek Edward, Malvern, Worcestershire (GB); Jackson, James David Joseph, Kidderminster, Worcestershire (GB)
(74) Representative: Jackson, Derek Charles

(56) References cited:
- EP-A- 0 002 502
- EP-A- 0 090 883
- EP-A- 0 130 629
- EP-A- 0 315 169
- CH-A- 418 213
- DE-A- 3 713 526
- DE-A- 3 940 149
- DE-A- 4 103 959
- GB-A- 1 350 661

## Description

The present invention relates to a method of coating a surface of a body of hydrophobic microporous thermal insulation material.

The term 'microporous' is used herein to identify porous or cellular materials in which the ultimate size of the cells or voids is less than the mean free path of an air molecule at NTP, i.e. of the order of 100 nm or smaller. A material which is microporous in this sense will exhibit very low transfer of heat by air conduction (that is collisions between air molecules). Such microporous materials include aerogel, which is a gel in which the liquid phase has been replaced by a gaseous phase in such a way as to avoid the shrinkage which would occur if the gel were dried directly from a liquid. A substantially identical structure can be obtained by controlled precipitation from solution, the temperature and pH being controlled during precipitation to obtain an open lattice precipitate. Other equivalent open lattice structures include pyrogenic (fumed) and electro-thermal types in which a substantial proportion of the particles have an ultimate particle size less than 100 nm. Any of these materials, based for example on silica, alumina or other metal oxides, may be used to prepare a composition which is microporous as defined above.

A known form of high performance microporous thermal insulation material comprises compacted microporous silica particles, and typically includes ceramic fibre reinforcement and rutile powder opacifier. Such a microporous thermal insulation material is described, for example, in GB-A-1 350 661.

Microporous thermal insulation material is generally hydrophilic in that it readily absorbs water. Unfortunately, the water on drying breaks down the microporous nature of the material and renders it unsuitable for use as a high-performance thermal insulation material. It is well known to the skilled person, however, that the microporous thermal insulation material can be rendered generally hydrophobic for example by incorporating water-repellant materials into the microporous material. Compacted hydrophobic microporous thermal insulation materials are weaker than conventional microporous thermal insulation materials because the hydrophobic treatment reduces the bonding effect between the silica particles. Hydrophobic microporous thermal insulation materials therefore generally require some form of protective coating to prevent damage to the microporous material during handling.

A disadvantage of such hydrophobic microporous thermal insulation material is that it is difficult and time consuming to coat the surface of the hydrophobic material directly, for example with water-based silicate adhesive. Surface active agents can be used to modify the surface of compacted hydrophobic microporous thermal insulation material sufficiently to allow the material to be coated with a water-based coating, but it is difficult to control the extent of penetration of the surface active agent below the surface of the microporous material and the presence of such surface active agents in the body of the microporous material further weakens the bond between the silica particles. These microporous thermal insulation materials are generally vulnerable to damage by abrasion and impact and an adhesive coating can be used for example to apply an abrasion- and impact-resistant cover, such as glass fibre cloth, to the surface of the microporous thermal insulation material.

It is therefore an object of the present invention to provide a relatively simple and economic method of applying a coating, such as a water-based silicate adhesive, to the surface of a body of hydrophobic microporous thermal insulation material without destroying the hydrophobic properties of the remainder of the microporous material.

According to the present invention there is provided a method of coating a surface of a body of hydrophobic microporous thermal insulation material comprising the steps of:
providing a body of a microporous thermal insulation material, incorporating a hydrophobing agent so as to render the insulation material hydrophobic;
heat treating the surface of the body of the microporous thermal insulation material so as to provide a hydrophilic surface layer of on the body of hydrophobic material; and
applying a water-based coating to the hydrophilic surface layer of the body of hydrophobic material.

The hydrophobic microporous thermal insulation material may comprise a block of material formed by compacting a dry particulate mixture of finely divided metal oxide, such as pyrogenic silica or alumina or silica or alumina aerogel which has subsequently been treated with a silane material to render it hydrophobic, with up to 5 per cent by weight of finely divided metal oxide which has not been treated to render it hydrophobic, up to 50 per cent by weight of an infra-red opacifier and up to 20 per cent by weight of a reinforcing fibre. We have found that the small proportion of untreated finely divided material, such as pyrogenic alumina or alumina aerogel, has no detrimental effect on the overall hydrophobic nature of the hydrophobic microporous thermal insulation material. The infra-red opacifier may be a finely divided radiation scattering material having a high refractive index such as titania for example in its rutile form, alumina, zirconia, iron oxide or chrome oxide. The reinforcing fibre may be, for example, ceramic fibre such as alumina fibre or aluminosilicate fibre, glass fibre or other inorganic fibre.

Thus the hydrophobic microporous thermal insulation material may be a substantially inorganic, non-fusible, compacted particulate material. The hydrophobic microporous thermal insulation material may comprise:
49 - 97 per cent by weight hydrophobic metal oxide
0 - 5 per cent by weight untreated metal oxide
1 - 20 per cent by weight reinforcing fibre
2 - 50 per cent by weight opacifier

In one preferred embodiment the hydrophobic microporous thermal insulation material may comprise:
58 per cent by weight hydrophobic pyrogenic silica
10 per cent by weight reinforcing fibre
32 per cent by weight opacifier

The hydrophobic pyrogenic silica may be of the type Aerosil R974 commercially available from Degussa AG, Germany. The reinforcing fibre may be in the form of alumino-silicate fibres sold under the Trade Mark FIBERFRAX and the opacifier may be titania in its rutile form.

In another preferred embodiment the hydrophobic microporous thermal insulation material may comprise:
60.0 per cent by weight hydrophobic pyrogenic silica
1.9 per cent by weight untreated alumina
4.8 per cent by weight reinforcing fibre
33.3 per cent by weight opacifier

The hydrophobic pyrogenic silica may be of the type Aerosil R974 commercially available from Degussa AG, Germany. The alumina may be of the type Aluminium Oxide C also commercially available from Degussa AG. The reinforcing fibre may be in the form of alumina fibres sold under the Trade Mark SAFFIL and the opacifier may be titania in its rutile form.

The surface of the microporous thermal insulation material may be heated with a gas burner. The gas burner may be provided with an elongate flame nozzle. The gas burner may be fuelled with a mixture of an inflammable gas and compressed air.

Alternatively, the surface of the microporous thermal insulation material may be heated in a furnace.

The coating may be applied by brushing or spraying.

The coating may comprise a water-based silicate adhesive.

The method may include the step of applying an abrasive-and/or impact-resistant cover, such as glass fibre cloth, to the coating.

For a better understanding of the present invention and to show more clearly how it may be carried into effect reference will now be made, by way of example, to the accompanying drawings in which:
Figure 1 shows one method of flame-treating the surface of a block of hydrophobic microporous thermal insulation material so as to render the surface hydrophilic;
Figure 2 shows a method of heating the surface of a block of hydrophobic microporous thermal insulation material in a furnace so as to render the surface hydrophilic;
Figure 3 shows a method of applying a coating by brushing onto the hydrophilic surface created by heating the surface of a block of hydrophobic microporous thermal insulation;
Figure 4 shows a method of applying a coating by spraying onto the hydrophilic surface created by heating the surface of a block of hydrophobic microporous thermal insulation;
Figure 5 shows a corver applied to the coating on the hydrophilic surface;
Figure 6 is a graph illustrating the effect of different heating times on the surface of a block of hydrophobic microporous thermal insulation material; and
Figure 7 is a graph illustrating the effect of a heat source held at different distances from the surface of a block of hydrophobic microporous thermal insulation material.

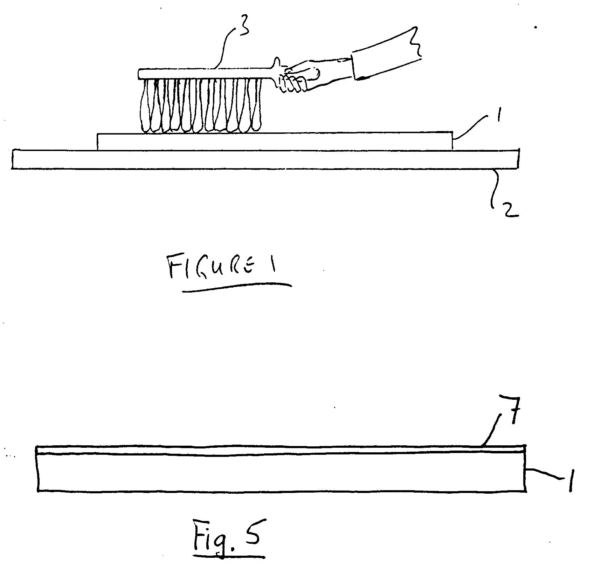

As shown in Figure 1, a block 1 of hydrophobic microporous thermal insulation material is placed on a suitable surface 2 and a face of the block is heat-treated with a hand-held burner 3. The burner 3 is fuelled with a suitable inflammable gas, such as propane gas, and compressed air and emits a plurality of relatively narrow flames from an elongate flame nozzle to produce a total flame width of about 100 mm.

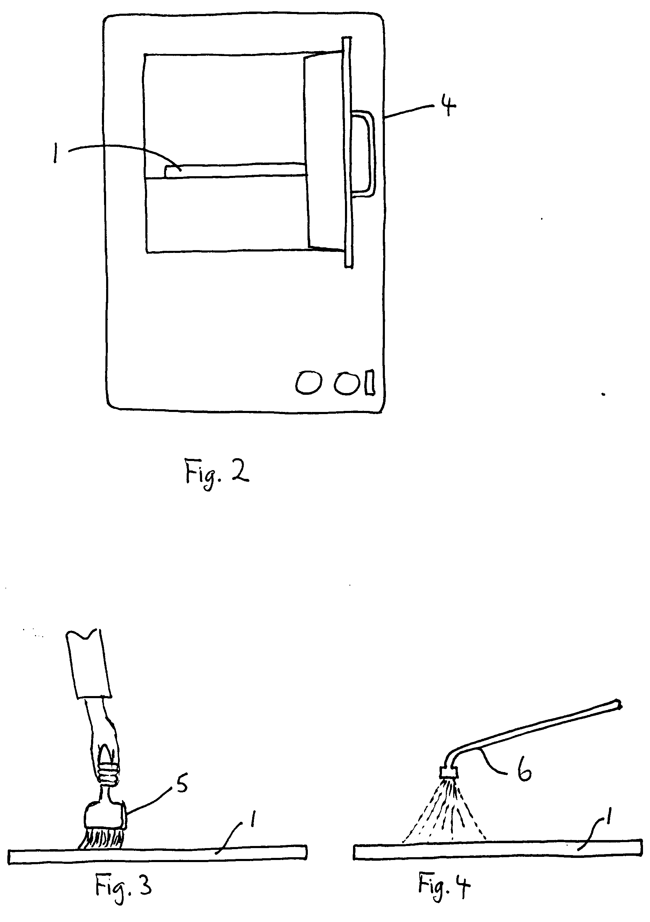

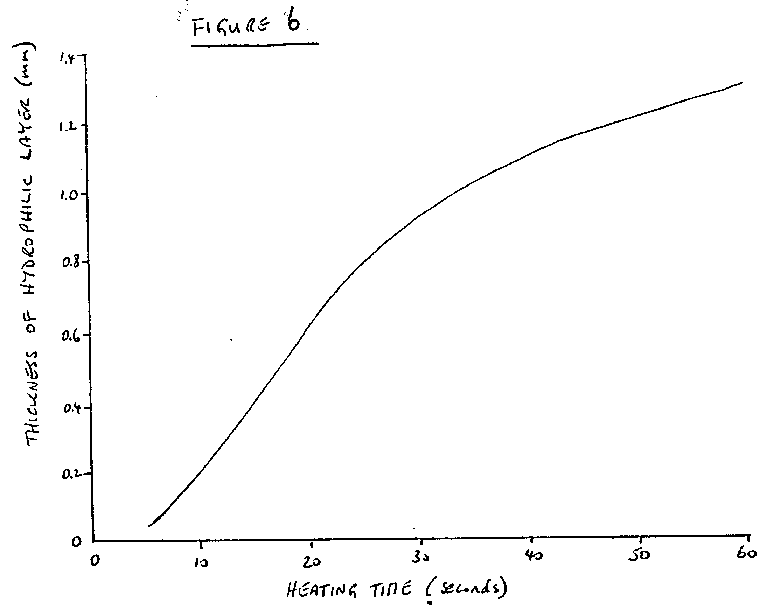

We have found that even the briefest exposure of the surface of the hydrophobic microporous thermal insulation material to the flame renders the surface hydrophilic such that it will readily accept a coating of, for example, a water-based silicate adhesive such as that sold by Chamtek Idenden Alumet under the Trade Mark HT Fibre Adhesive 10.02 so as to enable a protective cover of glass fibre cloth 7 to be applied to the surface of the microporous thermal insulation material as illustrated in Figure 5. The coating can be applied, for example, by brushing with a brush 5 as illustrated in Figure 3 or by spraying with a spray nozzle 6 as illustrated in Figure 4. Applying the coating and the protective cover to the flame-treated microporous thermal insulation material was found to be considerably easier and quicker than applying a coating and a protective cover to the hydrophobic insulation material.

In addition to heat-treating substantially flat surfaces, we have also successfully treated the surfaces of arcuate moulded components of hydrophobic microporous thermal insulation so as to enable a coating to be applied readily to the treated surface.

Instead of using a hand held burner, it is possible to use a burner mounted on a support. The burner may, for example, be adjustable as to the distance thereof from the hydrophobic microporous thermal insulation material to be treated. As a further alternative, the block 1 of hydrophobic thermal insulation material can be placed in a furnace 4, for example at 1000 °C, for a suitable time such as 30 to 60 seconds.

We have carried out tests to determine the effect of flame heat-treatment on the surface of a block of hydrophobic microporous thermal insulation material.

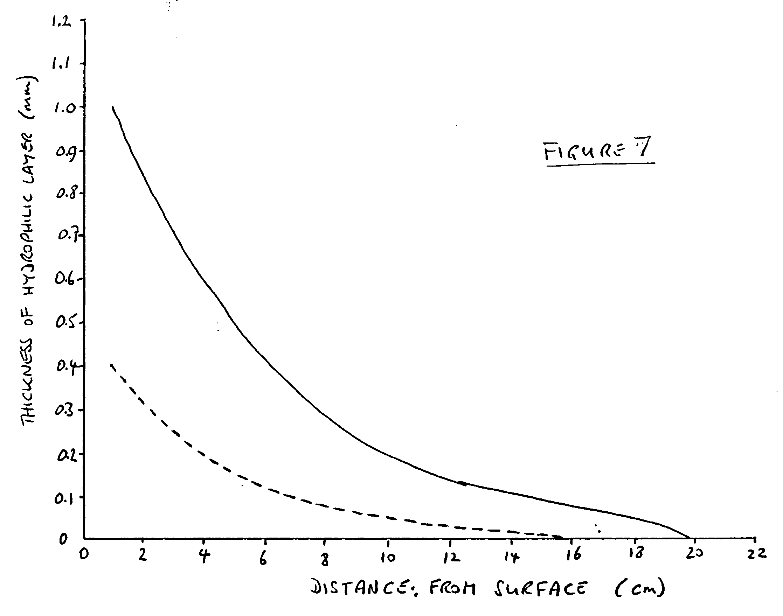

In a first test the elongate nozzle of the burner 3 was held 4 cm above the surface of the hydrophobic microporous thermal insulation material and the thickness of the hydrophilic layer produced was determined for different heating times. The results of the first test are summarised in Figure 6 which shows that the thickness of the hydrophilic layer increases with increasing heating times as might be expected. However, Figure 6 also shows that a measurable thickness for the hydrophilic layer arises with relatively short heating times, while the increase in thickness of the hydrophilic layer falls off with increasing heating times. Thus the thickness of the hydrophilic layer is relatively insensitive to the heating time in the flame and a hydrophilic surface layer can be created without destroying the hydrophobic nature of the underlying material.

In a second test, a heat source in the form of the elongate flame nozzle of the burner 3 was held at different distances above the surface of the hydrophobic microporous thermal insulation material and the thickness of the hydrophilic layer produced was determined for heating times in the flame of 10 seconds and 20 seconds. The results of the second test are summarised in Figure 7 in which the results for a heating time of 20 seconds are shown as a solid line and the results for a heating time of 10 seconds are shown as a dashed line. Figure 7 shows that the thickness of the hydrophilic layer decreases with increasing distance from the flame.nozzle as might be expected. However, Figure 7 also shows that the thickness of the hydrophilic layer is relatively constant over a wide range of distance. Thus the thickness of the hydrophilic layer is relatively insensitive to the distance of the flame nozzle from the surface of the hydrophobic microporous thermal insulation material.

These tests show that heat treatment of hydrophobic microporous thermal insulation material is practicable for use in an industrial environment where both the heating time and the distance of a hand held flame nozzle, for example, are likely to vary. Within wide limits the heat treatment will provide a hydrophilic surface layer that will readily accept a coating without destroying the hydrophobic nature of the underlying microporous material.

## Claims

1. A method of coating a surface of a body of hydrophobic microporous thermal insulation material comprising the steps of:
providing a body of a microporous thermal insulation material (1); incorporating a hydrophobing agent so as to render the insulation material hydrophobic;
heat treating the surface of the body of the microporous thermal insulation material (1) so as to provide a hydrophilic surface layer on the body of hydrophobic material; and
applying a water-based coating to the hydrophilic surface layer of the body of hydrophobic material.

2. A method according to claim 1, wherein the surface of the body of the microporous thermal insulation material (1) is heated with a gas burner (3).

3. A method according to claim 2, characterised in that the gas burner is provided with an elongate flame nozzle.

4. A method according to claim 2 or 3, characterised in that the gas burner (3) is fuelled with a mixture of an inflammable gas and compressed air.

5. A method according to claim 1, characterised in that the surface of the body of the microporous thermal insulation material (1) is heated in a furnace (4).

6. A method according to any preceding claim, characterised in that the coating is applied by brushing or spraying.

7. A method according to any preceding claim, characterised in that the coating comprises a water-based silicate adhesive.

8. A method according to any preceding claim and including the step of applying an abrasive- and/or impactresistant cover (7) to the coating.

9. A method according to claim 8, characterised in that the cover (7) comprises glass fibre cloth.

## Patentansprüche

1. Verfahren zum Beschichten einer Oberfläche eines Körpers aus hydrophobem, mikroporösem Wärmeisolierungsmaterial, umfassend die folgenden Schritte:
Bereitstehen eines Körpers aus einem mikroporösen Wärmeisolierungsmaterial (1); Einbauen eines Hydrophobierungsmittels, um das Isolierungsmaterial hydrophob zu machen;
Wärmebehandeln der Oberfläche des Körpers des mikroporösen Wärmeisolierungsmaterials (1), um eine hydrophile Oberflächenschicht auf dem Körper aus hydrophobem Material zu erzeugen; und
Aufbringen einer Schicht auf Wasserbasis auf die hydrophile Oberflächenschicht des Körpers aus hydrophobem Material.

2. Verfahren nach Anspruch 1, bei dem die Oberfläche des Körpers aus dem mikroporösen Wärmeisolierungsmaterial (1) mit einem Gasbrenner (3) erhitzt wird.

3. Verfahren nach Anspruch 2, dadurch gekennzeichnet, daß der Gasbrenner mit einer länglichen Flammendüse versehen ist.

4. Verfahren nach Anspruch 2 oder 3, dadurch gekennzeichnet, daß der Gasbrenner (3) mit einem Gemisch aus einem entzündbaren Gas und Druckluft gespeist wird.

5. Verfahren nach Anspruch 1, dadurch gekennzeichnet, daß die Oberfläche des Körpers aus dem mikroporösen Wärmeisolierungsmaterial (1) in einem Ofen (4) erhitzt wird.

6. Verfahren nach einem der vorhergehenden Ansprüche, dadurch gekennzeichnet, daß der Überzug durch Aufstreichen oder Aufsprühen aufgebracht wird.

7. Verfahren nach einem der vorhergehenden Ansprüche, dadurch gekennzeichnet, daß der Überzug einen Silikatklebstoff auf Wasserbasis umfaßt.

8. Verfahren nach einem der vorhergehenden Ansprüche, das den Schritt des Aufbringens einer scheuer- und schlagfesten Deckschicht (7) auf den Überzug beinhaltet.

9. Verfahren nach Anspruch 8, dadurch gekennzeichnet, daß die Deckschicht (7) Glasfasertuch umfaßt.

## Revendications

1. Procédé de revêtement d'une surface d'un corps de matériau d'isolation thermique microporeux hydrophobe comprenant les étapes de:
fourniture d'un corps de matériau d'isolation thermique microporeux (1), comportant un agent hydrofuge de manière à rendre le matériau d'isolation hydrophobe;
traitement thermique de la surface du corps du matériau d'isolation thermique microporeux (1) de manière à fournir une couche superficielle hydrophile sur le corps de matériau hydrophobe; et
application d'un revêtement à base d'eau sur la couche superficielle hydrophile du corps de matériau hydrophobe.

2. Procédé selon la revendication 1, dans lequel la surface du corps du matériau d'isolation thermique microporeux (1) est chauffée avec un brûleur à gaz (3).

3. Procédé selon la revendication 2, caractérisé en ce que le brûleur à gaz est muni d'un tube à flamme allongé.

4. Procédé selon la revendication 2 ou 3, caractérisé en ce que le brûleur à gaz (3) est alimenté en mélange d'un gaz inflammable et d'air comprimé.

5. Procédé selon la revendication 1, caractérisé en ce que la surface du corps de matériau d'isolation thermique microporeux (1) est chauffé dans un four (4).

6. Procédé selon l'une quelconque des revendications précédentes, caractérisé en ce que le revêtement est appliqué au pinceau ou par pulvérisation.

7. Procédé selon l'une quelconque des revendications précédentes, caractérisé en ce que le revêtement comprend un adhésif au silicate à base d'eau.

8. Procédé selon l'une quelconque des revendications précédentes et comprenant l'étape d'application d'une couverture résistant à l'abrasion et/ou aux chocs (7) sur le revêtement.

9. Procédé selon la revendication 8, caractérisé en ce que la couverture (7) est constituée d'un tissu de fibre de verre.
